# EUROPEAN PATENT APPLICATION

(11) **EP 4 776 137 A1**
(43) Date of publication of application: **15.07.2026**
(21) Application number: 24870382.9
(22) Date of filing: 05.09.2024
(51) Int. Cl.: G06F 9/52

(54) **METHOD FOR ACCESSING EXCLUSIVE DEVICE, AND RELATED APPARATUS**

(30) Priority: 28.09.2023 CN 202311288407
(71) Applicant: HUAWEI TECHNOLOGIES CO., LTD., Shenzhen 518129 (CN)
(72) Inventor: CHEN, Shiping, Shenzhen, Guangdong 518129 (CN); QIAO, Lizhong, Shenzhen, Guangdong 518129 (CN); TAN, Jinfei, Shenzhen, Guangdong 518129 (CN); QIU, Xingsheng, Shenzhen, Guangdong 518129 (CN); ZHU, Jiangbo, Shenzhen, Guangdong 518129 (CN); LIU, Shaohua, Shenzhen, Guangdong 518129 (CN)
(74) Representative: Gill Jennings & Every LLP
(86) International application number: PCT/CN2024/117044
(87) International publication number: WO 2025/066836

(57) **Abstract**

A method for accessing an exclusive device is provided and applied to the field of computer technologies. In the method for accessing an exclusive device, for a scenario with two independent operating systems, an access request sent by an application in a first operating system for the exclusive device is converted into an access assistance request sent to an application in a second operating system, to request the application in the second operating system to assist in accessing the exclusive device. In addition, a controller is disposed in the second operating system to control mutually exclusive access of the application in the second operating system to the exclusive device. Finally, access requests in the first operating system and the second operating system for the exclusive device both pass through the controller disposed in the second operating system, to ensure that concurrent access of applications to the exclusive device can also be restricted in a dual-operating system scenario and avoid affecting normal use of the exclusive device.

## Description

This application claims priority to Chinese Patent Application No. 202311288407.4, filed with the China National Intellectual Property Administration on September 28, 2023 and entitled "METHOD FOR ACCESSING EXCLUSIVE DEVICE AND RELATED APPARATUS", which is incorporated herein by reference in its entirety.

### TECHNICAL FIELD

This application relates to the field of computer technologies, and in particular, to a method for accessing an exclusive device and a related apparatus.

### BACKGROUND

A security module includes a trusted platform module (Trusted Platform Module, TPM) and a trusted cryptography module (Trusted Cryptography Module, TCM). The security module is usually configured to protect integrity of system startup firmware and security of a computer device. Generally, the security module is an exclusive device, that is, only one application is allowed to access the security module at a time. When a plurality of applications access the security module at the same time, the security module may have a problem such as tampering of an input parameter or an output result or abnormal running.

Based on this, in a related technology, concurrent access of a plurality of applications to the exclusive device is usually restricted, to ensure that only one application accesses the exclusive device at a time, so as to ensure normal running of the exclusive device.

However, in some scenarios, in a running process, the exclusive device is still prone to a problem such as parameter tampering or abnormal running. This affects normal use of the exclusive device.

### SUMMARY

This application provides a method for accessing an exclusive device, which can restrict concurrent access of a plurality of applications to the exclusive device and avoid affecting normal use of the exclusive device.

A first aspect of this application provides a method for accessing an exclusive device. The method is applied to a first controller. In the method, the first controller first obtains a first request message from a first application, where the first request message is used to request to access the exclusive device. Both the first controller and the first application are run in the first operating system, that is, both the first controller and the first application are software modules run in the first operating system. The first operating system is run on a processor other than the exclusive device. In addition, the processor that runs the first operating system and the exclusive device are located on a same network device (for example, a same network device such as a same computer, switch, or gateway).

Second, in response to a second operating system being started, the first controller sends, based on the first request message, a second request message to a second application run in the second operating system, where the second request message is used to request the second application to assist in accessing the exclusive device. Because the second request message is used to request the second application to assist the first application in accessing the exclusive device, the second application is used to replace the first application to complete a process of requesting to access the exclusive device, and the first controller no longer forwards the first request message from the first application to the exclusive device.

The second operating system is run on the processor other than the exclusive device. The processor that runs the first operating system and the second operating system is connected to the exclusive device through a bus. A second controller is run in the second operating system. The second controller is configured to control mutually exclusive access of the application in the second operating system to the exclusive device.

In this solution, when there are two independent operating systems, an access request sent by the application in the first operating system for the exclusive device is converted into an access assistance request sent to the application in the second operating system, to request the application in the second operating system to assist in accessing the exclusive device. In addition, the controller is disposed in the second operating system to control mutually exclusive access of the application in the second operating system to the exclusive device. Finally, access requests in the first operating system and the second operating system for the exclusive device both pass through the controller disposed in the second operating system, to ensure that concurrent access of applications to the exclusive device can also be restricted in a dual-operating system scenario and avoid affecting normal use of the exclusive device.

In a possible implementation, both the first operating system and the second operating system can be run independently. To be specific, the first operating system does not depend on the second operating system in a normal running process, and the second operating system does not depend on the first operating system in a normal running process. Specifically, when concurrent access to the exclusive device performed by the applications in the first operating system and the second operating system is not restricted, the application in the first operating system can access the exclusive device independently, and the application in the second operating system can also access the exclusive device independently.

In a possible implementation, the first operating system is run in a normal world, and the second operating system is run in a secure world. For example, the first operating system is a real-time operating system (Real-Time Operating System, RTOS), and the second operating system is an open portable trusted execution environment (Open Portable Trusted Execution Environment, OP-TEE).

In a possible implementation, the first operating system and the second operating system are run on the same processor, and the processor is connected to the exclusive device.

In this solution, access requests for the exclusive device in different operating systems that are run in the normal world and the secure world all pass through a controller disposed in an operating system in the secure world, to ensure that concurrent access of an application to the exclusive device can be further restricted in a specific scenario in which the device has the secure world and the normal world.

In a possible implementation, the processor includes a processor such as a network processor (Network Processor, NP), a central processing unit (Central Processing Unit, CPU), a graphics processing unit (Graphics Processing Unit, GPU), a tensor processing unit (tensor processing unit, TPU), or a data processing unit (Data Processing Unit, DPU).

In a possible implementation, the second controller belongs to a drive component of the exclusive device. For example, when the exclusive device is a TPM, the second controller belongs to a drive component of the TPM, that is, the drive component of the TPM can implement a concurrent access restriction function completed by the second controller. The second controller is run in the second operating system, the second operating system is run on the processor other than the exclusive device, and when all software modules on the second operating system access the exclusive device, the drive component that is of the exclusive device and that is disposed in the second operating system needs to be used. Therefore, the second controller is disposed in the drive component of the exclusive device, so that it can be ensured that the second controller obtains access request messages from all the applications in the second operating system.

In a possible implementation, the exclusive device is any one of the following devices: the TPM, a TCM, or a storage chip, for example, a NAND flash (flash) chip or a NOR flash chip.

In a possible implementation, the method for accessing an exclusive device further includes: The first controller obtains a first response message from the second application, where the first response message includes feedback data that is obtained after the second application assists in accessing the exclusive device and that is returned by the exclusive device; and then the first controller forwards the first response message to the first application.

That is, the first controller returns the obtained feedback data from the exclusive device to the first application along an original path, so that the first application can obtain the feedback data returned by the exclusive device.

In a possible implementation, the method for accessing an exclusive device further includes: The first controller obtains a third request message from the first application, where the third request message is used to request to access the exclusive device; and in response to the second operating system not being started, the first controller forwards the third request message to a third controller, where the third controller is run in the first operating system, and the third controller is configured to control mutually exclusive access of the application in the first operating system to the exclusive device.

That is, when the second operating system is not started, all request messages, received by the first controller from the applications, for requesting to access the exclusive device are forwarded to the third controller, and the third controller is further responsible for processing the request messages, to ensure that only one application accesses the exclusive device at a time.

In a possible implementation, when the second operating system is not started, the first controller is further configured to control mutually exclusive access of the application in the first operating system to the exclusive device. That is, the first controller is responsible for restricting concurrent access of a plurality of applications to the exclusive device.

A second aspect of this application provides a method for accessing an exclusive device. The method is applied to a control module. The control module includes a first access port and a second access port, and the control module is connected to the exclusive device. Specifically, the method for accessing an exclusive device includes: First, the control module obtains a first access request message through the first access port and obtains a second access request message through the second access port, where the first access request message comes from a first processing system that accesses the first access port, the second access request message comes from a second processing system that accesses the second access port, and both the first access request message and the second access request message are used to request to access the exclusive device.

Then, the control module forwards the first access request message and the second access request message to the exclusive device in an orderly manner, so that the exclusive device processes only one access request message at a time.

In this solution, the control module is disposed between the exclusive device and a plurality of independent processing systems, and the control module serves as a unified entry for accessing the exclusive device, so that access requests of the plurality of processing systems for the exclusive device are all processed by the control module, to implement control of mutually exclusive access of the plurality of processing systems to the exclusive device.

In a possible implementation, the first processing system includes a first processor, and the second processing system includes a second processor. That is, the first processing system and the second processing system include different processors.

In a possible implementation, the first processor and the second processor are deployed on a same system on chip (System on Chip, SoC). That is, both the first processing system and the second processing system are deployed on the same SoC, and different processing systems on the SoC include different processors. In addition, the first processing system and the second processing system respectively access the first access port and the second access port through different interfaces on the same SoC, to send the access request messages to the control module through the first access port and the second access port.

In a possible implementation, the control module is deployed on the SoC in which the first processing system and the second processing system are located.

In this solution, the control module is disposed on the same SoC to control concurrent access of a plurality of processing systems on the SoC, so that it can be ensured that the processing systems on the SoC can normally access the exclusive device, and a case of abnormal running of the exclusive device caused by concurrent access of the plurality of processing systems to the exclusive device does not occur.

In a possible implementation, the control module is deployed on a processor component outside the SoC where the first processing system and the second processing system are located, the processor component is connected to the first processor through the first access port, and the processor component is connected to the second processor through the second access port.

That is, the control module is no longer integrated into the SoC, but is connected to the SoC as a separate processor component, to control concurrent access of a plurality of processing systems on the SoC. In this way, during actual application, a structure of the SoC does not need to be adjusted, but a processor component connected between the SoC and the exclusive device is separately designed and manufactured, to ensure that the originally designed SoC can also normally access the exclusive device.

In a possible implementation, the processor component is a processor, an application-specific integrated circuit (Application Specific Integrated Circuit, ASIC) chip, or a programmable logic device.

A third aspect of this application provides an apparatus for accessing an exclusive device. The apparatus for accessing an exclusive device is a first controller, and the apparatus for accessing an exclusive device includes:
an obtaining unit, configured to obtain a first request message from a first application, where the first request message is used to request to access the exclusive device, both the first controller and the first application are run in a first operating system, and the first operating system is run on a processor other than the exclusive device; and
a sending unit, configured to: in response to a second operating system being started, send, based on the first request message, a second request message to a second application run in the second operating system, where the second request message is used to request the second application to assist in accessing the exclusive device.

The second operating system is run on the processor other than the exclusive device. The processor that runs the first operating system and the second operating system is connected to the exclusive device through a bus. A second controller is run in the second operating system. The second controller is configured to control mutually exclusive access of the application in the second operating system to the exclusive device.

In a possible implementation, both the first operating system and the second operating system can be run independently.

In a possible implementation, the first operating system is run in a normal world, and the second operating system is run in a secure world.

In a possible implementation, the first operating system and the second operating system are run on the same processor, and the processor is connected to the exclusive device.

In a possible implementation, the processor includes an NP, a CPU, a GPU, a TPU, or a DPU.

In a possible implementation, the second controller belongs to a drive component of the exclusive device.

In a possible implementation, the exclusive device is any one of the following devices: a TPM, a TCM, or a storage chip.

In a possible implementation, the obtaining unit is further configured to obtain a first response message from the second application, where the first response message includes feedback data that is obtained after the second application assists in accessing the exclusive device and that is returned by the exclusive device.

The sending unit is further configured to forward the first response message to the first application.

In a possible implementation, the obtaining unit is further configured to obtain a third request message from the first application, where the third request message is used to request to access the exclusive device.

The sending unit is further configured to: in response to the second operating system not being started, forward, by the first controller, the third request message to a third controller, where the third controller is run in the first operating system, and the third controller is configured to control mutually exclusive access of the application in the first operating system to the exclusive device.

In a possible implementation, the apparatus for accessing an exclusive device further includes: a control unit, configured to: when the second operating system is not started, control mutually exclusive access of the application in the first operating system to the exclusive device.

A fourth aspect of this application provides an apparatus for accessing an exclusive device. The apparatus for accessing an exclusive device is used in a control module. The control module includes a first access port and a second access port, and the control module is connected to the exclusive device. The apparatus for accessing an exclusive device includes:
an obtaining unit, configured to obtain a first access request message through the first access port and obtain a second access request message through the second access port, where the first access request message comes from a first processing system that accesses the first access port, the second access request message comes from a second processing system that accesses the second access port, and both the first access request message and the second access request message are used to request to access the exclusive device; and
a sending unit, configured to forward the first access request message and the second access request message to the exclusive device in an orderly manner, so that the exclusive device processes only one access request message at a time.

In a possible implementation, the first processing system includes a first processor, the second processing system includes a second processor, and the first processor and the second processor are deployed on a same SoC.

In a possible implementation, the control module is deployed on the SoC.

In a possible implementation, the control module is deployed on a processor component, the processor component is connected to the first processor through the first access port, and the processor component is connected to the second processor through the second access port.

In a possible implementation, the processor component is a processor, an ASIC chip, or a programmable logic device.

A fifth aspect of this application provides a network device, including a processor and a memory, where the memory is configured to store program code, and the processor is configured to invoke the program code in the memory, so that the network device performs the method according to any one of the implementations of the first aspect and the second aspect.

A sixth aspect of this application provides a computer-readable storage medium, where the computer-readable storage medium stores instructions. When the instructions are run on a computer, the computer is enabled to perform the method according to any one of the implementations of the first aspect and the second aspect.

A seventh aspect of this application provides a computer program product. When the computer program product is run on a computer, the computer is enabled to perform the method according to any one of the implementations of the first aspect and the second aspect.

An eighth aspect of this application provides a chip, including one or more processors. Some or all of the processors are configured to read and execute computer instructions stored in a memory, to perform the method according to any possible implementation of any one of the foregoing aspects. Optionally, the chip further includes the memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input/output interface or a bus interface. The method provided in this application is implemented by one chip, or is implemented by a plurality of chips in cooperation.

The solutions provided in the third aspect to the eighth aspect are used to implement or cooperate to implement the methods provided in the first aspect and the second aspect, and therefore can achieve beneficial effects the same as or corresponding to those in the first aspect and the second aspect. Details are not described herein.

### BRIEF DESCRIPTION OF DRAWINGS

FIG. 1 is a diagram of a system architecture according to an embodiment of this application;
FIG. 2 is a diagram of a system architecture to which a method for accessing an exclusive device is applied according to an embodiment of this application;
FIG. 3 is a schematic flowchart of a method for accessing an exclusive device according to an embodiment of this application;
FIG. 4 is another diagram of a system architecture to which a method for accessing an exclusive device is applied according to an embodiment of this application;
FIG. 5 is a diagram of an architecture of a network device according to an embodiment of this application;
FIG. 6 is a diagram of another architecture of a network device according to an embodiment of this application;
FIG. 7 is a schematic flowchart of accessing a TPM according to an embodiment of this application;
FIG. 8 shows a data flow direction of accessing a TPM when an operating system in a secure world is started according to an embodiment of this application;
FIG. 9 shows a data flow direction of accessing a TPM when an operating system in a secure world is not started according to an embodiment of this application;
FIG. 10 is a diagram of an application architecture of a method for accessing an exclusive device according to an embodiment of this application;
FIG. 11 is a diagram of a structure of a processing system according to an embodiment of this application;
FIG. 12 is a diagram of a structure in which a control module is deployed on an SoC according to an embodiment of this application;
FIG. 13 is a diagram of a structure in which a control module is deployed outside an SoC according to an embodiment of this application;
FIG. 14 is a diagram of a structure of a control module configured to implement control of concurrent access to a TPM according to an embodiment of this application;
FIG. 15 is a diagram of a structure of an apparatus for accessing an exclusive device according to an embodiment of this application; and
FIG. 16 is a diagram of a structure of another apparatus for accessing an exclusive device according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence.

For ease of understanding, the following describes some technical terms used in this embodiment.

### (1) Exclusive device

An exclusive device is a device that is exclusively used by an application during an entire running periodicity. That is, once the exclusive device is allocated to an application for use, the exclusive device is exclusively used by the application to which the exclusive device is allocated, and another application cannot access the exclusive device until the application to which the exclusive device is allocated finishes using the exclusive device and releases the exclusive device.

### (2) Trusted platform module (Trusted Platform Module, TPM)

A TPM is a chip that is planted inside a computer and provides a root of trust for the computer. Specifically, the TPM is a small chip including a cryptographic operation component and a storage component, and is configured to securely store information used to verify security of a platform (for example, a network device such as a switch or a personal computer), for example, information such as a password, a certificate, or an encryption key. The TPM generates a trusted key by using a built-in algorithm, and confidentiality and integrity of the key and other sensitive data are ensured by using a non-volatile random access memory (Non-Volatile Random Access Memory, NVRAM) and a storage root key (Storage Root Key, SRK).

### (3) Trusted cryptography module (Trusted Cryptography Module, TCM)

Similar to the TPM, the TCM is also a chip that is planted inside a computer and provides a root of trust for the computer. A difference between the TCP and the TMP lies in that the TCP and the TPM use different cryptographic algorithms.

### (4) Secure world and normal world

In a related technology, to provide a secure running environment for an application or a component in a computer, a TrustZone (TrustZone) technology is introduced into an ARM processor. The ARM processor that supports the TrustZone technology divides hardware resources and software resources into the secure world and the normal world.

Common operating systems and most applications are run in the normal world. Compared with those in the secure world, development resources in the normal world are rich. Therefore, the normal world is usually referred to as a rich execution environment (Rich Execution Environment, REE). Trusted operating systems are run in the secure world, and the secure world is usually referred to as a trusted execution environment (Trusted Execution Environment, TEE).

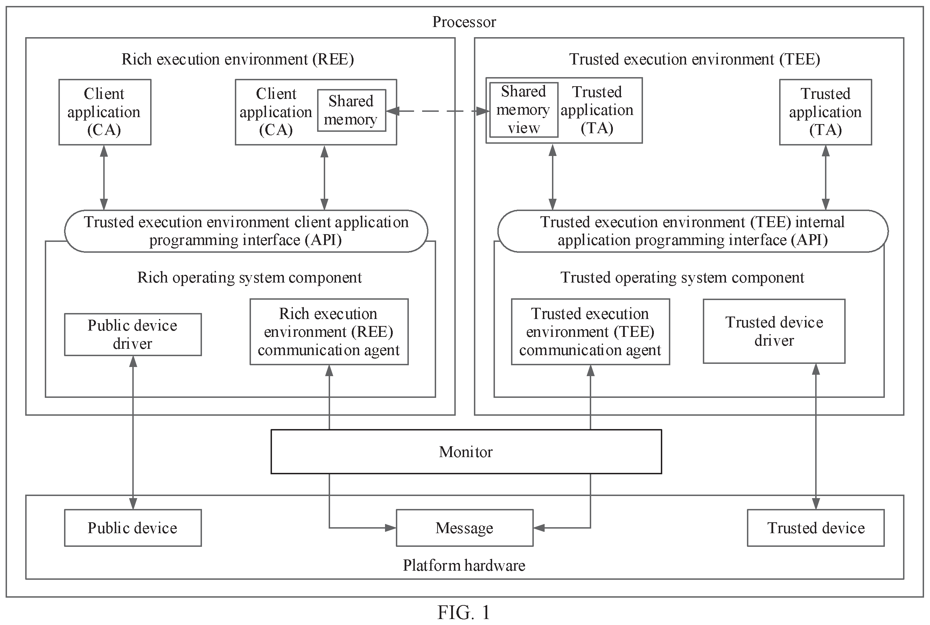

FIG. 1 is a diagram of a system architecture according to an embodiment of this application. As shown in FIG. 1, the system architecture includes the trusted execution environment and the rich execution environment. The trusted execution environment is specially provided for a highly security-sensitive application, and can ensure confidentiality of resources and data of the application. The rich execution environment is provided for conventional operating systems and general-purpose applications. An application executed on a rich execution environment side is referred to as a client application (client application, CA), for example, a third-party payment application such as a bank application. An application executed on a trusted execution environment side is referred to as a trusted application (trusted application, TA), for example, an application that executes a key service such as signature and encryption/decryption calculation.

Because the TA is run in the trusted execution environment, a deployment/upgrade operation of the TA needs to strictly comply with a security verification specification of a trusted execution environment issuer, for example, a measure such as using a digital signature, to ensure that each phase of the trusted execution environment is truly trusted. The trusted execution environment includes a trusted execution environment internal application programming interface (trusted execution environment internal application programming interface, TEE Internal API) and a trusted operating system component. Main functions of the TEE Internal API are as follows: a function of providing a trusted operating system component upward, communicating with a client application CA, implementing communication between TAs, and a function of providing functions such as secure storage, a cryptography function, and time. The trusted operating system component mainly includes a trusted device driver and a trusted execution environment TEE communication agent. The trusted execution environment communication agent provides a secure communication channel for the TA and the CA. For example, the trusted execution environment communication agent transfers a message to a rich execution environment communication agent by using platform hardware, to implement interaction between the TA and the CA. In addition, switching between the REE and the TEE is implemented by using a monitor.

The rich execution environment includes a trusted execution environment client application programming interface (trusted execution environment client application programming interface, TEE Client API) and a rich operating system. A rich operating system component mainly includes a public device driver and a rich execution environment communication agent. The rich execution environment communication agent is configured to communicate with the trusted execution environment, and provide a secure communication channel for the CA and the TA. The public device drive is used to drive a public device in the platform hardware. By using the TEE Client API and the TEE Functional API, the CA accesses a security service provided by the TA.

### (5) Mutually exclusive access

Mutually exclusive access means that when a plurality of applications attempt to access a shared resource at the same time, only one application is allowed to access the shared resource to ensure consistency and reliability of data.

### (6) Bus (Bus)

A bus is a public communication trunk used to transmit information between various functional components in a network device. The bus is essentially a transmission line bundle formed by wires.

Generally, due to the uniqueness of the exclusive device, in a related technology, concurrent access of a plurality of applications to the exclusive device is usually restricted when the exclusive device is used, to ensure that only one application accesses the exclusive device at a time, so as to ensure normal running of the exclusive device.

However, the inventor finds through research that in the related technology, in a computer, access of a plurality of applications in a same operating system to an exclusive device is usually restricted. In some special scenarios, technical means used in the related technology cannot completely ensure that only one application accesses the exclusive device at a time, and, in a running process, the exclusive device is still prone to a problem such as parameter tampering or abnormal running. This affects normal use of the exclusive device.

Specifically, when a plurality of operating systems that are run independently are deployed in a same device, applications in different operating systems may access the exclusive device at the same time. Concurrent access of applications in different operating systems cannot be restricted in a related technology. Consequently, this easily causes the exclusive device to be unable to be normally used.

Based on this, an embodiment of this application provides a method for accessing an exclusive device. When a same device has two independent operating systems, an access request sent by an application in a first operating system for the exclusive device is converted into an access assistance request sent to an application in a second operating system, to request the application in the second operating system to assist in accessing the exclusive device. In addition, a controller is disposed in the second operating system to control mutually exclusive access of the application in the second operating system to the exclusive device. Finally, access requests in the first operating system and the second operating system for the exclusive device both pass through the controller disposed in the second operating system, to ensure that concurrent access of applications to the exclusive device can also be restricted in a dual-operating system scenario and avoid affecting normal use of the exclusive device.

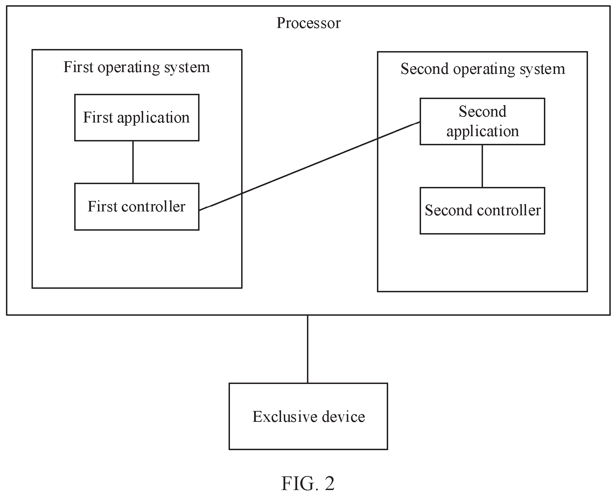

FIG. 2 is a diagram of a system architecture to which a method for accessing an exclusive device is applied according to an embodiment of this application. As shown in FIG. 2, the system architecture includes a processor and an exclusive device, and the processor is connected to the exclusive device through a bus. A first operating system and a second operating system are run in the processor. A first application and a first controller are run in the first operating system, and a second application and a second controller are run in the second operating system. In addition, the applications in the first operating system and the second operating system can both access the exclusive device through the bus.

In the first operating system, an access request sent by the first application to the exclusive device passes through the first controller; and in the second operating system, an access request sent by the second application to the exclusive device passes through the second controller. When both the first operating system and the second operating system are started, the first controller converts the access request sent by the first application to the exclusive device into an access assistance request sent to the second application, so that the second application assists the first application in accessing the exclusive device, to ensure that the access requests in the two operating systems for the exclusive device finally both pass through the second controller.

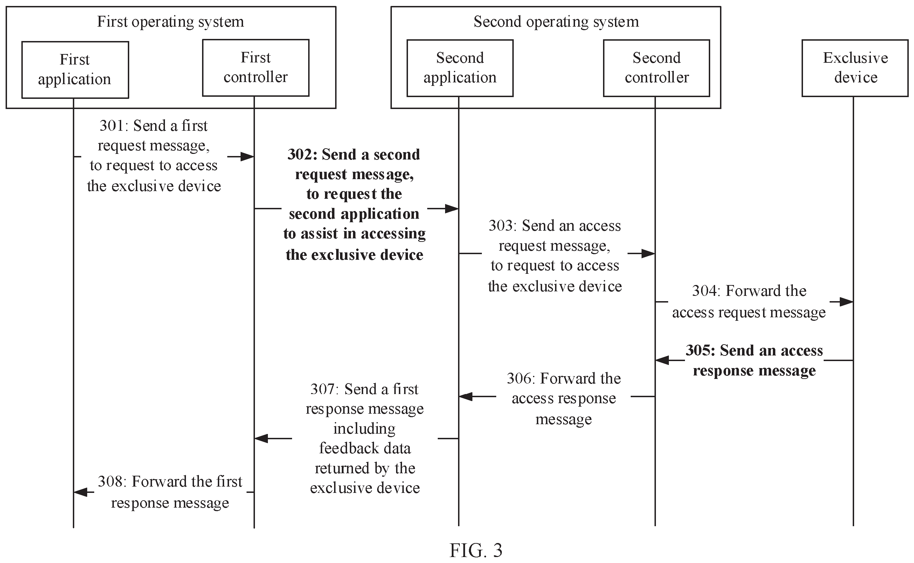

FIG. 3 is a schematic flowchart of a method for accessing an exclusive device according to an embodiment of this application. As shown in FIG. 3, the method for accessing an exclusive device includes the following steps 301 to 308.

Step 301: A first controller obtains a first request message from a first application, where the first request message is used to request to access the exclusive device.

In this embodiment, both the first controller and the first application are run in a first operating system, that is, both the first controller and the first application are software modules run in the first operating system. The first operating system is run on a processor other than the exclusive device. In addition, the processor that runs the first operating system and the exclusive device are located on a same network device (for example, a same network device such as a same computer, switch, or gateway), and the processor that runs the first operating system is connected to the exclusive device through a bus. Therefore, the first application run in the first operating system can access the exclusive device through the bus.

When the first application needs to access the exclusive device, the first application sends the first request message for requesting to access the exclusive device, and the first request message passes through the first controller. That is, all access requests of the first application for the exclusive device pass through the first controller, and the first controller processes the access requests sent by the first application.

The first request message sent by the first application includes content that the first application requests the exclusive device to complete. For example, the first request message is used to request the exclusive device to generate one key for the first application.

Optionally, the exclusive device is, for example, a TPM, a TCM, or a storage chip that does not support simultaneous access of a plurality of applications, for example, a NAND flash (flash) chip or a NOR flash chip. A type of the exclusive device is not specifically limited in this embodiment.

Step 302: In response to a second operating system being started, the first controller sends, based on the first request message, a second request message to a second application run in the second operating system, where the second request message is used to request the second application to assist in accessing the exclusive device.

When the second operating system is started, the first controller generates the second request message based on the first request message, and sends the second request message to the second application in the second operating system. Because the second request message is used to request the second application to assist the first application in accessing the exclusive device, the second application is used to replace the first application to complete a process of requesting to access the exclusive device, and the first controller no longer forwards the first request message from the first application to the exclusive device.

It should be noted that specific content of the second request message generated by the first controller is related to content of the first request message. For example, when the first request message is used to request the exclusive device to generate one key for the first application, the second request message sent by the first controller to the second application indicates the second application to assist the first application in requesting the exclusive device to generate one key.

The second operating system is run on a processor other than the exclusive device, and the processor that runs the second operating system is connected to the exclusive device through the bus.

Optionally, both the first operating system and the second operating system can be run independently. To be specific, the first operating system does not depend on the second operating system in a normal running process, and the second operating system does not depend on the first operating system in a normal running process. Specifically, when concurrent access to the exclusive device performed by the applications in the first operating system and the second operating system is not restricted, the application in the first operating system can access the exclusive device independently, and the application in the second operating system can also access the exclusive device independently.

For example, the first operating system is run in a normal world, and the second operating system is run in a secure world. For example, the first operating system is a real-time operating system (Real-Time Operating System, RTOS), and the second operating system is an open portable trusted execution environment (Open Portable Trusted Execution Environment, OP-TEE). In addition, the first operating system and the second operating system are run on the same processor connected to the exclusive device. In this case, the normal world and the secure world are actually two running states of the processor, and the processor independently runs the first operating system and the second operating system separately by switching between the two states: the normal world and the secure world. When the processor switches to the normal world state, the processor runs the first operating system; or when the processor switches to the secure world state, the processor runs the second operating system.

Optionally, the processor that runs the first operating system and the second operating system includes, for example, a processor such as a network processor (Network Processor, NP), a central processing unit (Central Processing Unit, CPU), a graphics processing unit (Graphics Processing Unit, GPU), a tensor processing unit (tensor processing unit, TPU), or a data processing unit (Data Processing Unit, DPU). A type of the processor is not specifically limited in this embodiment.

In addition, in some possible examples, the first operating system and the second operating system are alternatively run on different processors respectively. In addition, there is a physical connection between the processor that runs the first operating system and the processor that runs the second operating system, so that interaction between the first controller in the first operating system and the second application in the second operating system can be implemented.

Step 303: The second application sends an access request message to a second controller based on the received second request message, where the access request message is used to request to access the exclusive device.

In this embodiment, specific content of the access request message sent by the second application to the second controller is related to the content of the second request message. For example, when the second request message indicates the second application to assist the first application in requesting the exclusive device to generate one key, the access request message sent by the second application to the second controller is used to request the exclusive device to generate one key.

The second controller is further run in the second operating system, and the second controller is configured to control mutually exclusive access of an application in the second operating system to the exclusive device.

That is, when all applications in the second operating system need to access the exclusive device, the second controller needs to be used to implement access to the exclusive device. The second controller can obtain access request messages sent by all the applications in the second operating system to the exclusive device, and then forward, in an orderly manner, the access request messages sent by the applications, to ensure that the exclusive device processes only one access request message at a time.

For example, when the second controller obtains, at the same time, access request messages sent by a plurality of applications in the second operating system, the second controller first forwards one of the access request messages to the exclusive device, and after the exclusive device finishes processing the access request message, the second controller forwards a next access request message to the exclusive device, to ensure that the exclusive device does not obtain another access request message when processing one access request message.

In a possible implementation, the second controller belongs to a drive component of the exclusive device. For example, when the exclusive device is a TPM, the second controller belongs to a drive component of the TPM, that is, the drive component of the TPM can implement a concurrent access restriction function completed by the second controller. The second controller is run in the second operating system, the second operating system is run on the processor other than the exclusive device, and when all software modules on the second operating system access the exclusive device, the drive component that is of the exclusive device and that is disposed in the second operating system needs to be used. Therefore, the second controller is disposed in the drive component of the exclusive device, so that it can be ensured that the second controller obtains access request messages from all the applications in the second operating system.

For example, the second controller controls mutually exclusive access of the applications in the second operating system to the exclusive device by using a software mutex mechanism. Specifically, a software mutex is disposed on the second controller. The software mutex has two states: an unlocked state and a locked state. When obtaining an access request message from an application in the second operating system for the exclusive device, the second controller applies for the software mutex for the obtained access request message. If the software mutex is successfully obtained for any access request message, the second controller forwards, to the exclusive device, the access request message for which the software mutex is obtained, a status of the software mutex changes from the unlocked state to the locked state, and the second controller cannot apply for the software mutex for another access request message. After the exclusive device finishes processing the access request message, the status of the software mutex changes from the locked state to the unlocked state, and the second controller can continue to apply for the software mutex for an obtained access request message again, to determine an access request message that needs to be forwarded to the exclusive device subsequently.

In the foregoing description, the second controller controls mutually exclusive access of an application in the second operating system to the exclusive device by using the software mutex mechanism. In some embodiments, the second controller may also control mutually exclusive access of an application in the second operating system to the exclusive device by using another mechanism. This is not specifically limited in this embodiment.

Step 304: The second controller forwards the access request message from the second application to the exclusive device.

In this embodiment, after the second controller obtains the access request message from the second application, if the exclusive device does not have an access request message being processed currently, the second controller forwards the access request message from the second application to the exclusive device; or if the exclusive device has an access request message being processed currently, the second controller waits for the exclusive device to finish processing the access request message and then forwards the access request message from the second application to the exclusive device.

In general, an access request sent by an application in the first operating system to the exclusive device is converted into an access assistance request sent to an application in the second operating system, so that the application in the second operating system assists the application in the first operating system in accessing the exclusive device, to ensure that the access requests in the two operating systems for the exclusive device finally both pass through the second controller that is in the second operating system and that is configured to restrict concurrent access to the exclusive device.

Step 305: The exclusive device sends an access response message to the second controller.

After the exclusive device processes the access request message from the second application, the exclusive device generates the access response message and sends the access response message to the second controller.

Specific content of the access response message is related to content that the access request message requests the exclusive device to execute, that is, the access response message includes feedback data returned by the exclusive device for the access request message. For example, when the access request message is used to request the exclusive device to generate one key, the access response message includes one key generated by the exclusive device.

Step 306: The second controller forwards the access response message to the second application.

Step 307: The second application sends a first response message to the first controller based on the access response message, where the first response message includes feedback data that is obtained after the second application assists in accessing the exclusive device and that is returned by the exclusive device.

In this embodiment, because the second application assists the first application in accessing the exclusive device, after the exclusive device returns the access response message to the second application, the second application needs to return, through the first controller, the feedback data, in the access response message, returned by the exclusive device to the first application.

Specifically, the first response message is generated by the second controller based on the obtained access response message, and indicates a response result obtained after the second application assists the first application in accessing the exclusive device (that is, the feedback data returned by the exclusive device by using the access response message). For example, when the second request message indicates the second application to assist the first application in requesting the exclusive device to generate one key, the first response message includes one key generated by the exclusive device.

Step 308: The first controller forwards the first response message to the first application.

In general, a path through which the first application in the first operating system requests to access the exclusive device is sequentially as follows: first application → first controller → second application → second controller → exclusive device; and a path through which the first application in the first operating system obtains the feedback data returned by the exclusive device is sequentially as follows: exclusive device → second controller → second application → first controller → first application.

The foregoing embodiment describes a process in which an application in the first operating system accesses the exclusive device by using an application in the second operating system when both the first operating system and the second operating system are started. In some cases, the first operating system is started, and the second operating system may not be started. In this case, when the first operating system is started, and the second operating system is not started, a phenomenon in which applications in the two operating systems access the exclusive device at the same time no longer exists. Therefore, an application in the first operating system no longer needs to access the exclusive device by using an application in the second operating system.

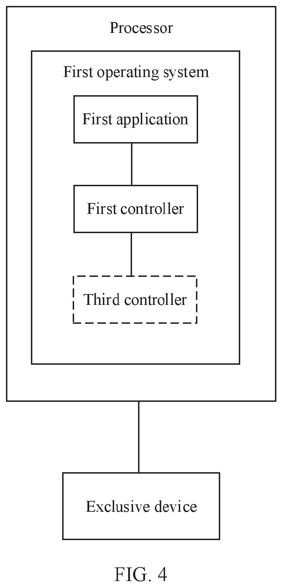

For example, FIG. 4 is another diagram of a system architecture to which a method for accessing an exclusive device is applied according to an embodiment of this application. As shown in FIG. 4, in the system architecture, because the second operating system is not started, only the first operating system is run on the processor. In addition, the first application and the first controller are run in the first operating system. Optionally, a third controller is further run in the first operating system.

When the third controller is not run in the first operating system, the first controller is further configured to control mutually exclusive access of an application in the first operating system to the exclusive device. That is, the first controller is responsible for restricting concurrent access of a plurality of applications to the exclusive device. A manner in which the first controller controls mutually exclusive access of an application in the first operating system to the exclusive device is similar to a manner in which the second controller controls mutually exclusive access of an application in the second operating system to the exclusive device in the foregoing embodiment. For details, refer to the foregoing embodiment, and details are not described herein again.

When the third controller is run in the first operating system, the first controller forwards obtained access requests from applications to the third controller, and the third controller controls mutually exclusive access of the plurality of applications to the exclusive device. That is, the third controller is responsible for restricting concurrent access of the plurality of applications to the exclusive device, to ensure that only one application accesses the exclusive device at a time.

For example, when the second operating system is not started, the first controller obtains a third request message from the first application, where the third request message is used to request to access the exclusive device. The third request message is similar to the first request message described in the foregoing embodiment. For details, refer to the description of the first request message. Details are not described herein again.

In response to the second operating system not being started, the first controller forwards the third request message to the third controller. The third controller is run in the first operating system, and the third controller is configured to control mutually exclusive access of an application in the first operating system to the exclusive device. That is, when the second operating system is not started, all request messages, received by the first controller from the applications, for requesting to access the exclusive device are forwarded to the third controller, and the third controller is further responsible for processing the request messages, to ensure that only one application accesses the exclusive device at a time.

For ease of understanding, the following describes in detail an execution procedure of the method for accessing an exclusive device provided in this embodiment in an actual application process with reference to a specific example.

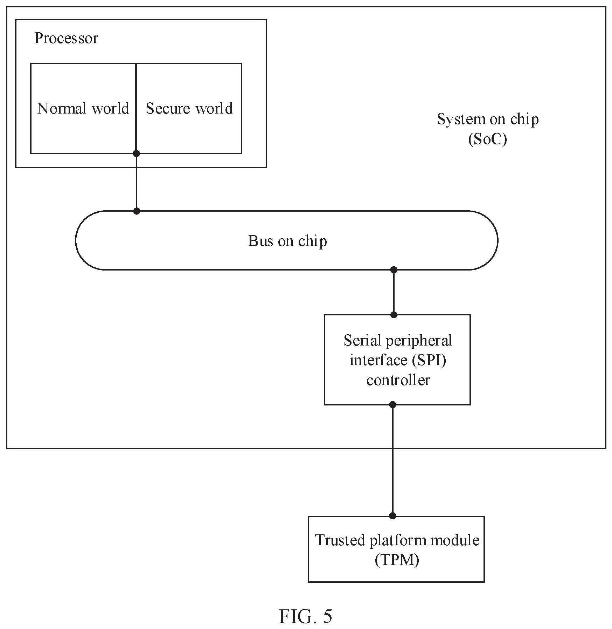

For example, FIG. 5 is a diagram of an architecture of a network device according to an embodiment of this application. As shown in FIG. 5, a same network device (for example, a network device such as a switch, a gateway, or a computer) includes a system on chip (System on Chip, SoC) and a TPM. The SoC includes a processor, and two operating systems can be run on the processor. One operating system (for example, an RTOS) is run in a normal world, and the other operating system (for example, an OP-TEE) is run in a secure world. The processor in the SoC is connected to a serial peripheral interface (Serial Peripheral Interface, SPI) controller through a bus on chip, and the SPI controller is connected to the TPM outside the SoC. The SPI controller is essentially a hardware interface on the SoC and is used to connect the SoC to the TPM.

All applications in the two operating systems run on the processor of the SoC can access the TPM. For example, when an application in the operating system run in the normal world sends a platform configuration register (Platform Configuration Registers, PCR) extension command to the TPM, another application in the operating system run in the secure world may send a random number obtaining command to the TPM, so that a phenomenon in which the application in the normal world and the application in the secure world simultaneously access the TPM occurs.

The application in the operating system run in the secure world may be triggered by the application in the operating system run in the normal world to send the random number obtaining command to the TPM. For example, an application 1 run in the normal world requests an application 2 run in the secure world to generate a key using a specific key algorithm. In this case, the application 2 run in the secure world sends the random number obtaining command to the TPM, to obtain a random number used to generate the key.

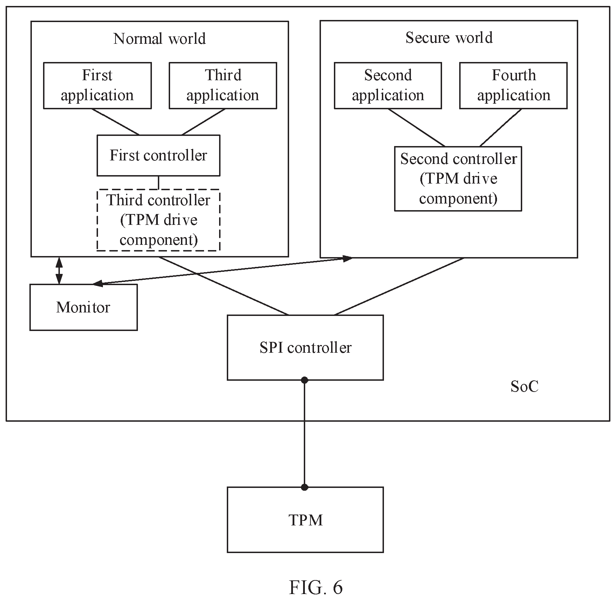

For example, FIG. 6 is a diagram of another architecture of a network device according to an embodiment of this application. As shown in FIG. 6, a system architecture shown in FIG. 6 is a further specific embodiment of the system architecture shown in FIG. 5. In the SoC shown in FIG. 6, the first application, a third application, and the first controller are run in the normal world. Optionally, the third controller is further run in the normal world. The second application, a fourth application, and the second controller are run in the secure world. The first application and the third application interact with the first controller, and the first controller further interacts with the third controller. The second application and the fourth application interact with the second controller. The third controller and the second controller are responsible for interacting with the SPI controller, to implement access to the TPM.

Optionally, the third controller is a part of a TPM drive component in the normal world, and the second controller is a part of the TPM drive component in the secure world. That is, the TPM drive component in the normal world is responsible for implementing a function of the third controller, and the TPM drive component in the secure world is responsible for implementing a function of the second controller.

In addition, a monitor is further run on the processor in the SoC, and the processor implements, by using the monitor, switching between two states: the normal world and the secure world. Specifically, for a specific manner in which the processor implements switching between the two states: the normal world and the secure world, refer to an existing related technology. Details are not described herein again.

It should be noted that in an embodiment shown in FIG. 6, an example in which the first application and the third application are run in the normal world, and the second application and the fourth application are run in the secure world is used for description. During actual application, one or more applications may run in the normal world, and one or more applications may also be run in the secure world. A quantity of applications run in the secure world and a quantity of applications run in the normal world are not specifically limited in this embodiment.

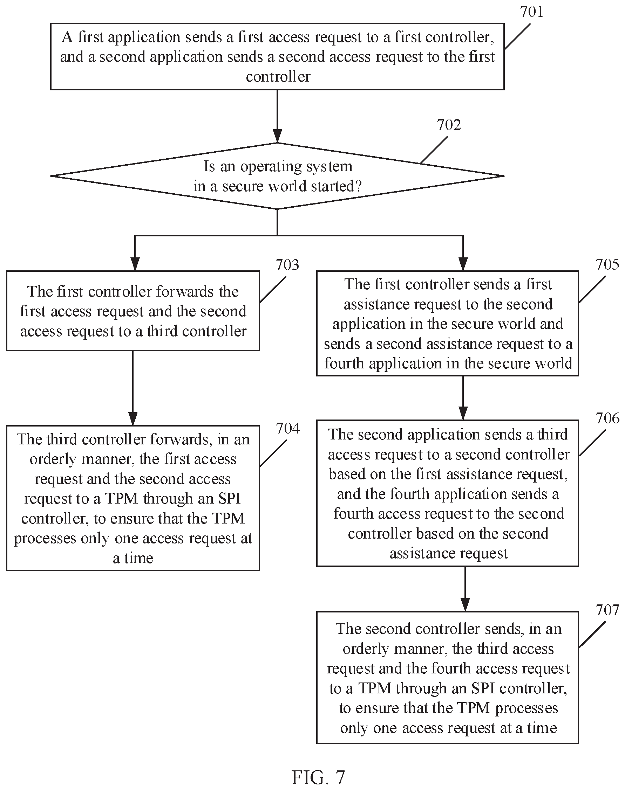

For example, FIG. 7 is a schematic flowchart of accessing the TPM according to an embodiment of this application. As shown in FIG. 7, a procedure in which an application in the normal world and an application in the secure world access the TPM includes the following steps 701 to 707.

Step 701: The first application sends a first access request to the first controller, and the second application sends a second access request to the first controller.

Both the first access request and the second access request are used to request to access the TPM. In addition, for example, the first access request and the second access request are sent to the first controller at the same time. For example, the first access request corresponds to the first request message in the foregoing embodiment.

Step 702: The first controller determines whether an operating system in the secure world is started.

Generally, whether the SoC in the network device starts the operating system in the secure world is optional. A user can determine, by modifying a configuration parameter on the network device, whether the SoC starts the operating system in the secure world when the SoC is powered on. For example, the configuration parameter of the network device includes an enable flag bit of the operating system in the secure world. When a value of the enable flag bit of the operating system in the secure world is 0, it indicates that the SoC does not start the operating system in the secure world when the SoC is powered on; or when a value of the enable flag bit of the operating system in the secure world is 1, it indicates that the SoC starts the operating system in the secure world when the SoC is powered on. Therefore, the first controller can determine, by reading the value of the enable flag bit of the operating system in the secure world, whether the operating system in the secure world is started.

Step 703: When the operating system in the secure world is not started, the first controller forwards the first access request and the second access request to the third controller.

In this embodiment, the third controller is configured to control mutually exclusive access of an application in the operating system run in the normal world to the TPM, to ensure that only one application in the operating system run in the normal world accesses the TPM at a same time.

In some other possible embodiments, when no third controller is disposed in the SoC, the first controller is configured to control mutually exclusive access of an application in the operating system run in the normal world to the TPM.

Step 704: The third controller forwards, in an orderly manner, the first access request and the second access request to the TPM through the SPI controller, to ensure that the TPM processes only one access request at a time.

In this embodiment, the third controller is configured to control mutually exclusive access of the application run in the normal world to the TPM.

Optionally, for example, a software mutex is disposed on the third controller. The third controller applies for the software mutex for each received access request, and when the software mutex is successfully obtained for any access request, forwards, to the TPM through the SPI controller, an access request for which the software mutex is successfully obtained. For an access request for which the software mutex is not successfully obtained, the third controller buffers the access request and waits for the software mutex to be released until the software mutex is successfully obtained for each access request.

That is, the third controller forwards the first access request and the second access request based on a sequence of applying for the software mutex, to ensure that the TPM does not receive another access request in a process of processing one of the access requests. A sequence in which the third controller forwards the first access request and the second access request is determined based on a sequence in which the software mutex is obtained for the first access request and the second access request. The sequence of forwarding the first access request and the second access request is not specifically limited in this embodiment.

It should be noted that, in addition to performing access control processing on the first access request from the first application and the second access request from the second application, the third controller can further perform access control processing on an access request sent by another application in the operating system in the normal world. That is, access requests sent by all applications in the operating system in the normal world are subject to access control processing performed by the third controller, to ensure that mutually exclusive access of a plurality of applications to the TPM can be implemented.

Step 705: When the operating system in the secure world is started, the first controller sends a first assistance request to the second application in the secure world and sends a second assistance request to the fourth application in the secure world.

The first assistance request is used to request the second application to assist the first application in accessing the TPM. The second assistance request is used to request the fourth application to assist the third application in accessing the TPM. For example, the first assistance request corresponds to the second request message in the foregoing embodiment.

Optionally, a mapping relationship is pre-established between an application run in the secure world and an application run in the normal world, and the first controller may send an assistance request to a corresponding application in the secure world based on a mapping relationship between different applications in the secure world and the normal world.

For example, in this embodiment, a mapping relationship is established between the first application in the normal world and the second application in the secure world, and a mapping relationship is established between the third application in the normal world and the fourth application in the secure world. In this way, when receiving the first access request from the first application, the first controller sends the first assistance request to the second application that has the mapping relationship with the first application, to request the second application to assist the first application in accessing the TPM. When receiving the second access request from the third application, the first controller sends the second assistance request to the fourth application that has the mapping relationship with the third application, to request the fourth application to assist the third application in accessing the TPM.

It should be noted that in this embodiment, an example in which the mapping relationship is established between the first application and the second application, and the mapping relationship is established between the third application and the fourth application is used for description. During actual application, different applications in the normal world can establish a mapping relationship with a same application in the secure world. For example, both the first application and the third application establish a mapping relationship with the second application. This is not specifically limited in this embodiment.

Step 706: The second application sends a third access request to the second controller based on the first assistance request, and the fourth application sends a fourth access request to the second controller based on the second assistance request.

After receiving the first assistance request, the second application generates, based on content of the first assistance request, the third access request used to request to access the TPM, and sends the third access request to the second controller, to assist the first application in accessing the TPM. Similarly, after receiving the second assistance request, the fourth application generates, based on content of the second assistance request, the fourth access request used to request to access the TPM, and sends the fourth access request to the second controller, to assist the third application in accessing the TPM.

For example, the third access request corresponds to the access request message in the foregoing embodiment.

Step 707: The second controller sends, in an orderly manner, the third access request and the fourth access request to the TPM through the SPI controller, to ensure that the TPM processes only one access request at a time.

In this embodiment, the second controller is configured to control mutually exclusive access of an application run in the secure world to the TPM. A manner in which the second controller controls mutually exclusive access of an application in the secure world to the TPM is similar to a manner in which the third controller controls mutually exclusive access of an application in the normal world to the TPM. For details, refer to the foregoing step 704. Details are not described herein again.

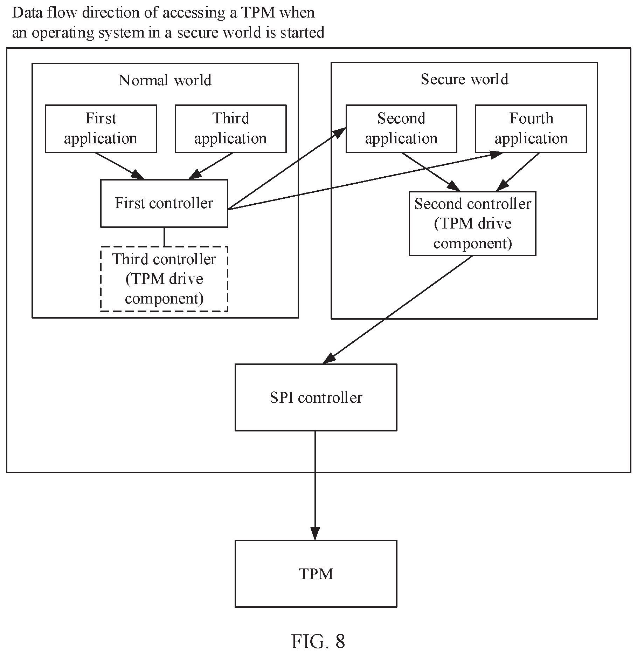

For example, FIG. 8 shows a data flow direction of accessing the TPM when the operating system in the secure world is started according to an embodiment of this application. As shown in FIG. 8, when the operating system in the secure world is started, a data flow for accessing the TPM first flows from the first application and the third application in the normal world to the first controller, then flows from the first controller to the second application and the fourth application in the secure world, then continues to flow from the second application and the fourth application to the second controller in the secure world, and finally flows to the TPM through the SPI controller. That is, all data flows of applications in the normal world accessing the TPM are directed by the first controller to applications in the secure world, and mutually exclusive access control is performed by the second controller in a centralized manner.

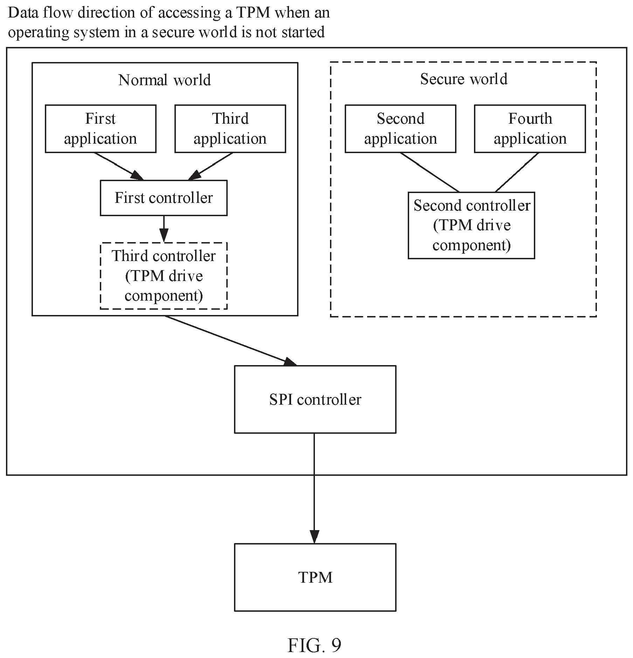

FIG. 9 shows a data flow direction of accessing the TPM when the operating system in the secure world is not started according to an embodiment of this application. As shown in FIG. 9, when the operating system in the secure world is not started, a data flow for accessing the TPM first flows from the first application and the third application in the normal world to the first controller, then flows from the first controller to the third controller in the normal world, and finally flows to the TPM through the SPI controller. That is, when the operating system in the secure world is not started, the data flows of the applications in the normal world accessing the TPM does not need to be directed by the first controller to the applications in the secure world, and mutually exclusive access control is performed by the third controller in the normal world in a centralized manner.

The foregoing embodiment describes a process of controlling mutually exclusive access of applications in two operating systems to the exclusive device. The following describes a process of controlling mutually exclusive access of applications in different hardware systems to the exclusive device.

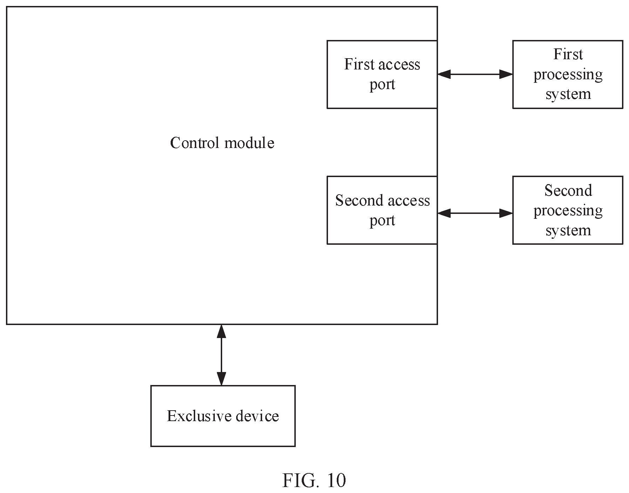

FIG. 10 is a diagram of an application architecture of a method for accessing an exclusive device according to an embodiment of this application. As shown in FIG. 10, the application architecture includes a control module, a first processing system, a second processing system, and the exclusive device. The control module includes a first access port and a second access port. The first processing system accesses the control module through the first access port, and the second processing system accesses the control module through the second access port. In addition, the first processing system and the second processing system have independent hardware processor resources, that is, the first processing system and the second processing system can be run independently and can independently initiate access to the exclusive device. In addition, the control module is further connected to the exclusive device.

In the application architecture shown in FIG. 10, the control module is responsible for obtaining access request messages from different processing systems, and performing concurrency control processing on the access request messages, to control mutually exclusive access of a plurality of processing systems to the exclusive device.

The application architecture shown in FIG. 10 is used as an example, and the procedure of the control module executing the method for accessing an exclusive device provided in this embodiment is as follows.

First, the control module obtains the first access request message through the first access port and obtains the second access request message through the second access port.

The first access request message comes from the first processing system that accesses the first access port, the second access request message comes from the second processing system that accesses the second access port, and both the first access request message and the second access request message are used to request to access the exclusive device.

Optionally, for example, the control module obtains the first access request message and the second access request message at the same time, or obtains the first access request message and the second access request message at different times. This embodiment does not limit a sequence of obtaining, by the control module, the first access request message and the second access request message.

Then, the control module forwards the first access request message and the second access request message to the exclusive device in an orderly manner, so that the exclusive device processes only one access request message at a time.

In this embodiment, the control module is responsible for performing concurrency control on the access request message requesting to access the exclusive device, to ensure that the access request message is forwarded to the exclusive device each time only when the exclusive device is idle (that is, the exclusive device does not have an access request message being processed).

For example, when the control module obtains the first access request message and the second access request message at the same time, the control module first forwards the first access request message to the exclusive device and buffers the second access request message, and after the exclusive device finishes processing the first access request message, the control module then forwards the second access request message to the exclusive device, so that the exclusive device processes only one access request message at a time.

For another example, when the control module first obtains the first access request message, the control module first forwards the first access request message to the exclusive device. In addition, in a process in which the exclusive device processes the first access request message, the control module obtains the second access request message. In this case, the control module buffers the obtained second access request message, and after the exclusive device finishes processing the first access request message, the control module forwards the second access request message to the exclusive device.

In addition, if the control module obtains another access request message from the first processing system in a process in which the exclusive device processes the first access request message, the control module also buffers the another access request message from the first processing system, and triggers forwarding only when the exclusive device does not have an access request message being processed.

It should be noted that in the foregoing description, the control module is connected to two processing systems: the first processing system and the second processing system. During actual application, the control module may be connected to two or more processing systems through different access ports, and perform concurrent control processing on access request messages sent by these processing systems, to implement control of mutually exclusive access of a plurality of processing systems to the exclusive device. This embodiment does not specifically limit a quantity of processing systems connected to the control module.

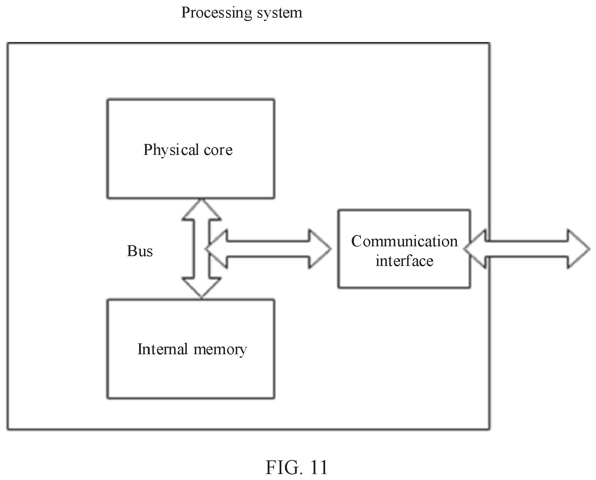

Optionally, the first processing system includes a first processor, and the second processing system includes a second processor. That is, the first processing system and the second processing system include different processors. For example, FIG. 11 is a diagram of a structure of a processing system according to an embodiment of this application. Structures of the first processing system and the second processing system are, for example, a structure of the processing system shown in FIG. 11. As shown in FIG. 11, the processing system actually includes a processor. The processing system includes a physical core, an internal memory (for example, an internal static random-access memory (Static Random-Access Memory, SRAM)), and a communication interface. The physical core, the internal memory, and the communication interface are connected to each other through a bus. Based on the physical core and the internal memory, the processing system can run applications independently and communicate with the control module through the communication interface.

That is, because each processing system can independently run an application and actively initiate access to the exclusive device, it is actually impossible to control concurrent access of each processing system to the exclusive device by using a software module. Therefore, in this embodiment, a hardware module (that is, the control module) including a plurality of access ports is used to control concurrent access of a plurality of independent processing systems to the exclusive device, to ensure that all access request messages sent by the plurality of independent processing systems pass through a unified control module, so as to ensure that the control module can be used to implement control of mutually exclusive access of the plurality of processing systems to the exclusive device.

Optionally, the first processor and the second processor are deployed on a same SoC. That is, both the first processing system and the second processing system are deployed on the same SoC, and different processing systems on the SoC include different processors. In addition, the first processing system and the second processing system respectively access the first access port and the second access port through different interfaces on the same SoC, to send the access request messages to the control module through the first access port and the second access port.

When the first processing system and the second processing system are deployed on the same SoC, the control module may be deployed in a plurality of manners.

In a possible implementation, the control module is deployed on the SoC where the first processing system and the second processing system are located.

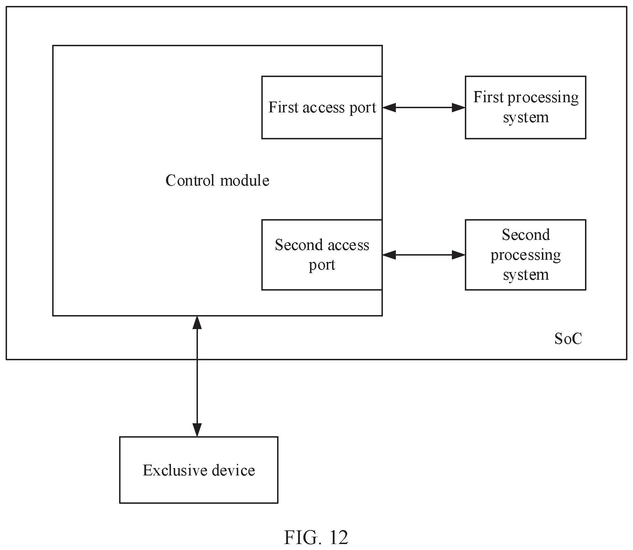

For example, FIG. 12 is a diagram of a structure in which the control module is deployed on the SoC according to an embodiment of this application. As shown in FIG. 12, the first processing system, the second processing system, and the control module are deployed on the SoC. The first processing system accesses the first access port on the control module, and the second processing system accesses the second access port on the control module. In addition, the control module is further connected to the exclusive device outside the SoC. The control module is disposed on the same SoC to control concurrent access of the plurality of processing systems on the SoC, so that it can be ensured that the processing system on the SoC can normally access the exclusive device, and a case of abnormal running of the exclusive device caused by concurrent access of the plurality of processing systems to the exclusive device does not occur.

In another possible implementation, the control module is deployed on a processor component, the processor component is connected to the first processor through the first access port, and the processor component is connected to the second processor through the second access port. In addition, the processor component where the control module is deployed is located outside the SoC where the first processing system and the second processing system are located. That is, the control module is no longer integrated into the SoC, but is connected to the SoC as a separate processor component, to control concurrent access of the plurality of processing systems on the SoC. In this way, during actual application, a structure of the SoC does not need to be adjusted, but a processor component connected between the SoC and the exclusive device is separately designed and manufactured, to ensure that the originally designed SoC can also normally access the exclusive device.

Optionally, the processor component where the control module is deployed is, for example, a processor, an application-specific integrated circuit (Application Specific Integrated Circuit, ASIC) chip, or a programmable logic device (programmable logic device, PLD). The programmable logic device includes, for example, any one or more of the following devices: a complex programmable logic device (complex programmable logic device, CPLD), a field-programmable gate array (field-programmable gate array, FPGA), and a generic array logic (generic array logic, GAL).

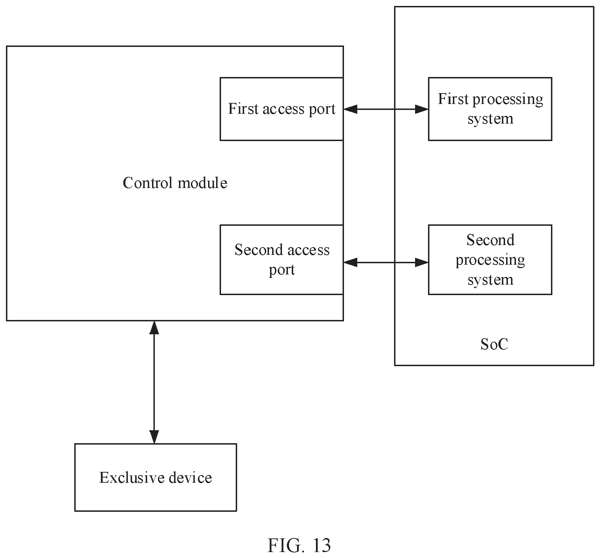

For example, FIG. 13 is a diagram of a structure in which the control module is deployed outside the SoC according to an embodiment of this application. As shown in FIG. 13, the first processing system and the second processing system are deployed on the SoC. The control module is disposed outside the SoC. The first processing system accesses the first access port on the control module, and the second processing system accesses the second access port on the control module. In addition, the control module is further connected to the exclusive device outside the SoC. That is, the SoC is connected to the exclusive device through the control module, and both the first processing system and the second processing system on the SoC need to implement access to the exclusive device by using the control module.

In still another possible implementation, the control module is deployed on the exclusive device. That is, based on a hardware module configured to implement an original function of the exclusive device, the control module is additionally integrated, so that the control module configured to implement concurrent access control is additionally deployed on the exclusive device.

For ease of understanding, the following describes in detail an implementation and a working procedure of the control module with reference to a specific example.

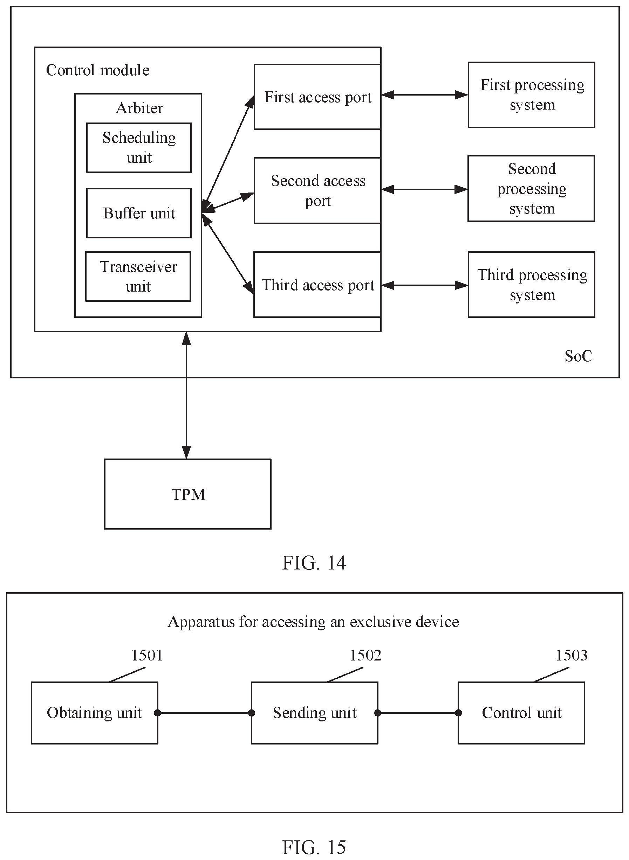

FIG. 14 is a diagram of a control module configured to implement control of concurrent access to the TPM according to an embodiment of this application. FIG. 14 is described by using an example in which the control module and the plurality of processing systems are deployed on the same SoC. During actual application, the control module may be alternatively deployed outside the SoC. Details are not described herein again.

As shown in FIG. 14, the SoC includes the first processing system, the second processing system, a third processing system, and the control module, and the control module is further connected to the TPM outside the SoC. The first processing system accesses the first access port on the control module, the second processing system accesses the second access port on the control module, and the third processing system accesses a third access port on the control module. That is, a plurality of processing systems on the SoC are connected to a plurality of access ports on the control module respectively, and different processing systems are connected to different access ports on the control module.

In addition, the control module includes an arbiter, and the arbiter includes a scheduling unit, a buffer unit, and a transceiver unit. When the TPM needs to be accessed, any one of the first processing system, the second processing system, and the third processing system sends an access request message to the control module through a connected access port. In this way, the arbiter in the control module may determine, based on an access port from which the access request message is received, a processing system from which the access request message comes.

The transceiver unit in the control module is configured to forward the access request message to the TPM, and receive response data returned by the TPM.

The buffer unit in the control module includes a message queue and a response data queue. The command queue is used to store an access request message sent by each processing system, and the response data queue is used to store response data returned after the TPM processes the access request message.

The scheduling unit in the control module is responsible for scheduling and delivering the access request message. Specifically, the scheduling unit applies for a hardware mutex for an access request message in the message queue by using a hardware mutex mechanism; if the hardware mutex is successfully obtained for an access request message, the scheduling unit extracts the access request message from the message queue and forwards the access request message to the TPM; or if the hardware mutex is not successfully obtained for the access request message, the scheduling unit waits for the hardware mutex to be released until the hardware mutex is successfully obtained.

For example, refer to Table 1. Table 1 indicates an access port number, a message queue number, and a response data queue number that are set by the control module for each processing system.

**Table 1**

| | Processing system number | Access port number | Message queue number | Response data queue number |
|---|---|---|---|---|
| First processing system | 1 | 1 | 1 | 1 |
| Second processing system | 2 | 2 | 2 | 2 |
| Third processing system | 3 | 3 | 3 | 3 |

Specifically, a procedure in which the plurality of processing systems on the SoC access the TPM includes, for example, the following multiple steps.

Step 1: The first processing system, the second processing system, and the third processing system respectively send an access request message to the control module to request to access the TPM.

Step 2: For each received access request message, the arbiter in the control module determines, based on an access port from which the access request message is received, a processing system from which the access request message is sent, to place the access request message in a message queue with a corresponding number. For example, an access request message sent by the first processing system is sent to the arbiter through an access port 1 in the control module. After receiving the access request message from the access port 1, the arbiter places the access request message in a message queue 1. Similarly, an access request message sent by the second processing system is placed in a message queue 2, and an access request message sent by the third processing system is placed in a message queue 3.

Step 3: The scheduling unit sequentially polls access request messages in the message queue 1, the message queue 2, and the message queue 3 by using a polling algorithm, and schedules and delivers the access request messages. The scheduling unit first determines whether there is an access request message in the message queue 1. If there is an access request message in the message queue 1, the scheduling unit selects an access request message at the head of the message queue 1 to apply for the hardware mutex, and forwards the access request message to the TPM after the hardware mutex is successfully obtained; or if the hardware mutex is not successfully obtained for the access request message, the scheduling unit waits for the hardware mutex to be released until the hardware mutex is successfully obtained. After the access request message in the message queue 1 is successfully delivered, an access request message is selected from the head of the message queue 2 for processing. After the access request message obtained from the message queue 2 is processed, an access request message is selected from the head of the message queue 3 for processing. The processing is performed cyclically.

Step 4: The transceiver unit sends an access request message selected by the scheduling unit to the TPM through an SPI bus.

Step 5: The TPM parses and processes the access request message, and returns response data.

Step 6: The transceiver unit receives the response data returned by the TPM, and stores the response data in a response data queue with a corresponding number.

Step 7: Each processing system in the SoC reads, from a response data queue with a corresponding number, response data returned by the TPM.

The foregoing describes the method for accessing an exclusive device provided in embodiments of this application. The following describes an apparatus for performing the foregoing method for accessing an exclusive device.

FIG. 15 is a diagram of a structure of an apparatus for accessing an exclusive device according to an embodiment of this application. As shown in FIG. 15, the apparatus for accessing an exclusive device is a first controller, and the apparatus for accessing an exclusive device includes:
an obtaining unit 1501, configured to obtain a first request message from a first application, where the first request message is used to request to access the exclusive device, both the first controller and the first application are run in a first operating system, and the first operating system is run on a processor other than the exclusive device; and
a sending unit 1502, configured to: in response to a second operating system being started, send, based on the first request message, a second request message to a second application run in the second operating system, where the second request message is used to request a second application to assist in accessing the exclusive device.

The second operating system is run on the processor other than the exclusive device. The processor that runs the first operating system and the second operating system is connected to the exclusive device through a bus. A second controller is run in the second operating system. The second controller is configured to control mutually exclusive access of the application in the second operating system to the exclusive device.

In a possible implementation, both the first operating system and the second operating system can be run independently.

In a possible implementation, the first operating system is run in a normal world, and the second operating system is run in a secure world.

In a possible implementation, the first operating system and the second operating system are run on the same processor, and the processor is connected to the exclusive device.

In a possible implementation, the processor includes an NP, a CPU, a GPU, a TPU, or a DPU.

In a possible implementation, the second controller belongs to a drive component of the exclusive device.

In a possible implementation, the exclusive device is any one of the following devices: a TPM, a TCM, or a storage chip.

In a possible implementation, the obtaining unit 1501 is further configured to obtain a first response message from the second application, where the first response message includes feedback data that is obtained after the second application assists in accessing the exclusive device and that is returned by the exclusive device.

The sending unit 1502 is further configured to forward the first response message to the first application.

In a possible implementation, the obtaining unit 1501 is further configured to obtain a third request message from the first application, where the third request message is used to request to access the exclusive device.

The sending unit 1502 is further configured to: in response to the second operating system not being started, forward, by the first controller, the third request message to a third controller, where the third controller is run in the first operating system, and the third controller is configured to control mutually exclusive access of the application in the first operating system to the exclusive device.

In a possible implementation, the apparatus for accessing an exclusive device further includes: a control unit 1503, configured to: when the second operating system is not started, control mutually exclusive access of the application in the first operating system to the exclusive device.

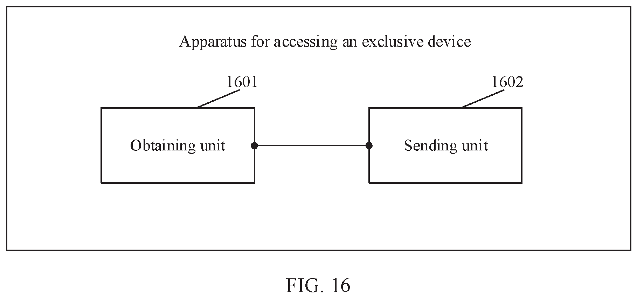

FIG. 16 is a diagram of a structure of another apparatus for accessing an exclusive device according to an embodiment of this application. As shown in FIG. 16, the apparatus for accessing an exclusive device is used in a control module. The control module includes a first access port and a second access port, and the control module is connected to the exclusive device. The apparatus for accessing an exclusive device includes:
an obtaining unit 1601, configured to obtain a first access request message through the first access port and obtain a second access request message through the second access port, where the first access request message comes from a first processing system that accesses the first access port, the second access request message comes from a second processing system that accesses the second access port, and both the first access request message and the second access request message are used to request to access the exclusive device; and
a sending unit 1602, configured to forward the first access request message and the second access request message to the exclusive device in an orderly manner, so that the exclusive device processes only one access request message at a time.

In a possible implementation, the first processing system includes a first processor, the second processing system includes a second processor, and the first processor and the second processor are deployed on a same SoC.

In a possible implementation, the control module is deployed on the SoC.

In a possible implementation, the control module is deployed on a processor component, the processor component is connected to the first processor through the first access port, and the processor component is connected to the second processor through the second access port.

In a possible implementation, the processor component is a processor, an ASIC chip, or a programmable logic device.

Embodiments in this specification are described in a progressive manner. For same or similar parts in embodiments, refer to each other. Each embodiment focuses on a difference from other embodiments.

That A refers to B means that A is the same as B or that A is a simple variant of B.

In this specification and claims in embodiments of this application, the terms "first", "second", and the like are intended to distinguish between different objects, but are not intended to describe a particular order of the objects, and cannot be understood as an indication or implication of relative importance. For example, a first rate-limiting channel and a second rate-limiting channel are used to distinguish between different rate-limiting channels, but are not used to describe a particular order of the rate-limiting channels. It cannot be understood that the first rate-limiting channel is more important than the second rate-limiting channel.

In embodiments of this application, unless otherwise specified, "at least one" means one or more, and "a plurality of" means two or more.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When computer program instructions are loaded and executed on a computer, all or some of the procedures or functions described in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State Drive, SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A method for accessing an exclusive device, comprising:
obtaining, by a first controller, a first request message from a first application, wherein the first request message is used to request to access the exclusive device, both the first controller and the first application are run in a first operating system, and the first operating system is run on a processor other than the exclusive device; and
in response to a second operating system being started, sending, by the first controller based on the first request message, a second request message to a second application run in the second operating system, wherein the second request message is used to request the second application to assist in accessing the exclusive device, wherein
the second operating system is run on the processor other than the exclusive device, the processor that runs the first operating system and the second operating system is connected to the exclusive device through a bus, a second controller is run in the second operating system, and the second controller is configured to control mutually exclusive access of the application in the second operating system to the exclusive device.

2. The method according to claim 1, wherein the first operating system is run in a normal world, and the second operating system is run in a secure world.

3. The method according to claim 1 or 2, wherein the first operating system and the second operating system are run on the same processor, and the processor is connected to the exclusive device.

4. The method according to claim 3, wherein the processor comprises a network processor NP, a central processing unit CPU, a graphics processing unit GPU, a tensor processing unit TPU, or a data processing unit DPU.

5. The method according to any one of claims 1 to 4, wherein the second controller belongs to a drive component of the exclusive device.

6. The method according to any one of claims 1 to 5, wherein the exclusive device is any one of the following devices: a trusted platform module TPM, a trusted cryptography module TCM, or a storage chip.

7. The method according to any one of claims 1 to 6, wherein the method further comprises:
obtaining, by the first controller, a first response message from the second application, wherein the first response message comprises feedback data that is obtained after the second application assists in accessing the exclusive device and that is returned by the exclusive device; and
forwarding, by the first controller, the first response message to the first application.

8. The method according to any one of claims 1 to 7, wherein the method further comprises:
obtaining, by the first controller, a third request message from the first application, wherein the third request message is used to request to access the exclusive device; and
in response to the second operating system not being started, forwarding, by the first controller, the third request message to a third controller, wherein the third controller is run in the first operating system, and the third controller is configured to control mutually exclusive access of the application in the first operating system to the exclusive device.

9. The method according to any one of claims 1 to 7, wherein when the second operating system is not started, the first controller is further configured to control mutually exclusive access of the application in the first operating system to the exclusive device.

10. A method for accessing an exclusive device, wherein the method is applied to a control module, the control module comprises a first access port and a second access port, the control module is connected to the exclusive device, and the method comprises:
obtaining, by the control module, a first access request message through the first access port and obtaining, by the control module, a second access request message through the second access port, wherein the first access request message comes from a first processing system that accesses the first access port, the second access request message comes from a second processing system that accesses the second access port, and both the first access request message and the second access request message are used to request to access the exclusive device; and
forwarding, by the control module, the first access request message and the second access request message to the exclusive device in an orderly manner, so that the exclusive device processes only one access request message at a time.

11. The method according to claim 10, wherein the first processing system comprises a first processor, the second processing system comprises a second processor, and the first processor and the second processor are deployed on a same system on chip SoC.

12. The method according to claim 11, wherein the control module is deployed on the SoC.

13. The method according to claim 11, wherein the control module is deployed on a processing component, the processing component is connected to the first processor through the first access port, and the processing component is connected to the second processor through the second access port.

14. The method according to claim 13, wherein the processor component is a processor, an application-specific integrated circuit ASIC chip, or a programmable logic device.

15. An apparatus for accessing an exclusive device, wherein the apparatus is a first controller, and the apparatus comprises:
an obtaining unit, configured to obtain a first request message from a first application, wherein the first request message is used to request to access the exclusive device, both the first controller and the first application are run in a first operating system, and the first operating system is run on a processor other than the exclusive device; and
a sending unit, configured to: in response to a second operating system being started, send, based on the first request message, a second request message to a second application run in the second operating system, wherein the second request message is used to request the second application to assist in accessing the exclusive device, wherein
the second operating system is run on the processor other than the exclusive device, the processor that runs the first operating system and the second operating system is connected to the exclusive device through a bus, a second controller is run in the second operating system, and the second controller is configured to control mutually exclusive access of the application in the second operating system to the exclusive device.

16. The apparatus according to claim 15, wherein the first operating system is run in a normal world, and the second operating system is run in a secure world.

17. The apparatus according to claim 15 or 16, wherein the first operating system and the second operating system are run on the same processor, and the processor is connected to the exclusive device.

18. The apparatus according to claim 17, wherein the processor comprises an NP, a CPU, a GPU, a TPU, or a DPU.

19. The apparatus according to any one of claims 15 to 18, wherein
the obtaining unit is further configured to obtain a first response message from the second application, wherein the first response message comprises feedback data that is obtained after the second application assists in accessing the exclusive device and that is returned by the exclusive device; and
the sending unit is further configured to forward the first response message to the first application.

20. The apparatus according to any one of claims 15 to 19, wherein
the obtaining unit is further configured to obtain a third request message from the first application, wherein the third request message is used to request to access the exclusive device; and
the sending unit is further configured to: in response to the second operating system not being started, forward, by the first controller, the third request message to a third controller, wherein the third controller is run in the first operating system, and the third controller is configured to control mutually exclusive access of the application in the first operating system to the exclusive device.

21. An apparatus for accessing an exclusive device, wherein the apparatus is used in a control module, the control module comprises a first access port and a second access port, the control module is connected to the exclusive device, and the apparatus comprises:
an obtaining unit, configured to obtain a first access request message through the first access port and obtain a second access request message through the second access port, wherein the first access request message comes from a first processing system that accesses the first access port, the second access request message comes from a second processing system that accesses the second access port, and both the first access request message and the second access request message are used to request to access the exclusive device; and
a sending unit, configured to forward the first access request message and the second access request message to the exclusive device in an orderly manner, so that the exclusive device processes only one access request message at a time.

22. The apparatus according to claim 21, wherein the first processing system comprises a first processor, the second processing system comprises a second processor, and the first processor and the second processor are deployed on a same SoC.

23. The apparatus according to claim 22, wherein the control module is deployed on the SoC.

24. A network device, comprising a processor and a memory, wherein the memory is configured to store program code, and the processor is configured to invoke the program code in the memory, to enable the network device to perform the method according to any one of claims 1 to 14.
